**Europäisches Patentamt**

**European Patent Office**

**Office européen des brevets**

(19)

(11) Publication number: **0 021 571**
**B1**

(12) **EUROPEAN PATENT SPECIFICATION**

(45) Date of publication of patent specification: **10.07.85**

(51) Int. Cl.⁴: **B 01 F 17/42** // C09K3/32

(21) Application number: **80301471.1**

(22) Date of filing: **06.05.80**

(54) **Oil dispersants.**

(30) Priority: **22.05.79 GB 7917708**

(43) Date of publication of application:
**07.01.81 Bulletin 81/01**

(45) Publication of the grant of the patent:
**10.07.85 Bulletin 85/28**

(84) Designated Contracting States:
**BE DE FR GB NL SE**

(56) References cited:
**AT-B- 329 722**
**AT-B- 335 587**
**DE-A-1 911 943**
**DE-A-2 018 798**
**DE-A-2 454 932**
**DE-A-2 558 907**
**DE-A-2 626 552**
**DE-A-2 704 067**
**US-A-3 821 372**

**The file contains technical information
submitted after the application was filed and
not included in this specification**

(73) Proprietor: **IMPERIAL CHEMICAL INDUSTRIES
PLC**
**Imperial Chemical House Millbank**
**London SW1P 3JF (GB)**

(72) Inventor: **Hancock, Roger Ian**
**9, Bentinck Road**
**Fairfield, Stockton-on-Tees, Cleveland (GB)**
Inventor: **Cornes, Peter Leslie**
**78 Rievaulx Way**
**Guisborough, Cleveland (GB)**

(74) Representative: **Locke, Timothy John et al**
**Imperial Chemical Industries PLC Legal
Department: Patents Po Box 6**
**Welwyn Garden City Herts, AL7 1HD (GB)**

Courier Press, Leamington Spa, England.

## 0 021 571

**Description**

This invention relates to oil dispersants.

Oil spillages which occur at sea present environmental problems in that the oil may for example spread as an oil slick and drift onto beaches thus contaminating them or may affect wild life for example sea birds. It may be necessary to disperse such spillages and for this purpose oil dispersants may be applied to them; such dispersants may also be used for example in cleaning tanks which are contaminated with oil or similar substances.

This invention comprises oil dispersants which comprise

1. at least one compound which comprises at least 3, preferably 3—100 and more preferably 4 to 20 polyglycol residues each of which residues comprises 10—40 and preferably 10—25 propylene oxide residues and 3—40 and preferably 5—25 ethylene oxide residues and having 15—60 propylene and ethylene oxide residues in total per polyglycol residue which is a condensation product of ethylene and propylene oxide with a polyamine of formula $H_2N[(CH_2)_nNH]_pH$ in which n is a integer having a value of 1—12 and preferably 1—6, p is an integer having a value of 1—100 and preferably 1—15, or a mixture of such polyamines, and especially hexamethylene diamine, or para alkyl phenol/formaldehyde condensates having 3—12 alkyl phenol groups.

2. a non-ionic surfactant which is a condensation product of propylene oxide and/or ethylene oxide with an alcohol having 10—20 and preferably 12—18 carbon atoms, an alkyl phenol preferably a p-alkyl phenol, having a total of 4—16 carbon atoms in its alkyl group or groups, a carboxylic acid having 10—20 and preferably 12—18 carbon atoms, the amine, amide, carboxylic acid or alcohol preferably being a saturated aliphatic compound which preferably comprises a straight chain with at most 2 carbon atoms in side chains or an aliphatic compound as aforesaid which comprises at most two carbon to carbon double bonds, the alcohol, acid, amide or amine having two or preferably one functional groups each of which is condensed with from 2—20 propylene and/or ethylene oxide groups, the ratio of propylene oxide to ethylene oxide residues being preferably in the ratio 1:10 to 10:1 and,

3. a solvent for compounds (1) and (2) which is miscible with oil.

It is preferred that the non-ionic surfactants referred to under (2) above should comprise ethylene oxide and/or propylene oxide residues to the extent of 20—60% by weight of the total molecule, the amine, alcohol, acid, phenol or amide residue comprising the remainder of the molecule, the total molecular weight of the molecule being 100—600 and preferably 200—500.

The solvent referred to under (3) above preferably has a high flash point for example above 60°C by the Pensky Marten closed cup method and preferably also has a low mammalian and fish toxicity. It preferably lowers the interfacial tension between oil and water.

Suitably the solvent may comprise several components for example one component of the solvent may be a condensate for example of propylene oxide or ethylene oxide or of both as a block or random condensate with an alcohol having 1—8 carbon atoms which suitably contains from 1 to 20 for example 2 to 20 olefine oxide groups, ethylene oxide and propylene oxide groups preferably being in a ratio of 1:10 to 10:1, together with aliphatic or alicyclic hydrocarbons or alcohols having 8—30 carbon atoms and preferably 10—24 carbon atoms, for example $C_{10}$ to $C_{30}$ alicyclic hydrocarbons derived by polymerisation of $C_5$ dimers, and/or alcohols, esters and/or ethers having for example 10 to 30 carbon atoms.

This invention will be further described with reference to the following Examples, in which a description of the test method used to simulate the dispersion of an oil slick is given in the next paragraph. This test method was used in Examples 1—10.

1.5 litres of a 3.5 wt % solution of sodium chloride were placed in a 4 litre capacity beaker. 1 ml of weathered Kuwait crude oil was placed on the surface of the water. Dispersant was added to the oil on the surface via a syringe and the system allowed to stand for 2 minutes on a table attached to a flask shaker, the table being able to be rocked at varying speeds to simulate wave motion. The beaker was rocked at slow speed (approximately 60 movements a minute) for up to 30 minutes and observations were made at intervals on the behaviour of the oil.

Example 1

A typical conventional dispersant formulation was made up comprising:—

|  | Parts by weight |
| --- | --- |
| Oleyl alcohol ethoxylate (5 moles ethylene oxide/mole oleyl alcohol) | 30 |
| Dioctyl sulphosuccinate | 10 |
| Ethanol | 30 |
| Ethylene glycol monobutyl ether | 30 |

2

**0 021 571**

This formulation was tested under comparable conditions to the dispersant formulations described in Examples 2—10 when it was found to disperse less of the oil over a 10 minute period.

Example 2

A dispersant formulation was made up comprising:—

| | Parts by weight |
|---|---|
| 1. Hexamethylendiamine reacted with ethylene oxide and then propylene oxide and then ethylene oxide in a molar ratio 1:4:52:35 (Substance A) | 10 |
| 2. Tall oil acid ethoxylate (5 moles ethylene oxide/mole acid) (Substance B) | 10 |
| 3. A mixture of octanols, dioctylethers and octyloctanoates (Substance C) | 10 |
| 4. Methanolpropoxylate (An average of 3.7 moles of propylene oxide/mole methanol (Substance D) | 70 |

1 ml of this solution was added to the oil in the test described above. The oil started to disperse immediately after the addition of the dispersant and after five minutes was completely dispersed from the water surface in the form of fine droplets.

Example 3

A formulation of the following composition:—

| | Parts by weight |
|---|---|
| 1. Substance A | 10 |
| 2. Substance B | 10 |
| 3. Water | 20 |
| 4. Substance D | 60 |

was tested as in Example 2.
The time for complete dispersion was 5 minutes.

Example 4

A formulation of the following composition:—

| | Parts by weight |
|---|---|
| 1. Substance A | 9 |
| 2. Substance B | 10 |
| 3. Substance C | 60 |
| 4. Methanol alkoxylate (an average of 3.2 moles of ethylene oxide and 2 moles of propylene oxide/mole methanol) | 20 |
| 5. Water | 1 |

was tested as in Example 2.
The time for complete dispersion was 3 minutes.

Example 5
A formulation of the following composition:—

|  | Parts by weight |
|---|---|
| 1. Substance A | 30 |
| 2. Substance B | 30 |
| 3. Water | 20 |
| 4. Substance D | 20 |

was tested as in Example 2.
The time for complete dispersion was 5 minutes.

Example 6
A formulation of the following composition:—

|  | Parts by weight |
|---|---|
| 1. Substance A | 18 |
| 2. Substance B | 20 |
| 3. Substance C | 20 |
| 4. Substance D | 40 |
| 5. Water | 2 |

was tested as in Example 2.
The time for complete dispersion was 5 minutes.

Example 7
A formulation of the following composition:—

|  | Parts by weight |
|---|---|
| 1. Substance A | 9 |
| 2. Substance B | 10 |
| 3. Substance C | 60 |
| 4. Ethylene glycol monoethyl ether | 20 |
| 5. Water | 1 |

was tested as in Example 2.
The time for complete dispersion was 1 to 2 minutes.

Example 8
A formulation of the following composition:—

| | Parts by weight |
|---|---|
| 1. Hexamethylene diamine, reacted with ethylene oxide and then propylene oxide and then ethylene oxide in a molar ratio 1:4:27:20 | 18 |
| 2. Substance B | 10 |
| 3. Substance D | 50 |
| 4. Water | 22 |

was tested as in Example 2.
The time for complete dispersion was 10 minutes.

Example 9
A formulation of the following composition:—

| | Parts by weight |
|---|---|
| 1. Hexamethylene diamine, reacted with ethylene oxide and then propylene oxide and then ethylene oxide in a molar ratio 1:4:52:27 | 10 |
| 2. Substance B | 10 |
| 3. Substance D | 60 |
| 4. Water | 20 |

was tested as in Example 2.
The time for complete dispersion was 8 minutes.

Example 10
A formulation of the following composition:—

| | Parts by weight |
|---|---|
| 1. Octyl phenol/formaldehyde resin molecular weight 910 reacted with propylene oxide and ethylene oxide in a molar ratio 1:43:34 | 18 |
| 2. Substance B | 10 |
| 3. Substance D | 50 |
| 4. Water | 22 |

was tested as in Example 2.
The time for complete dispersion was 8 minutes.
The following evaluations of compositions in dispersing an oil slick were carried out in accordance with the Department of Industry, Warren Spring Laboratory, Report No. LR152(ES) "A method of Testing Oil Dispersant Chemicals at Sea".
The evaluation took place at sea under wind force 2 5, salinity (by salinometer) of 3.5 wt % and a sea temperature of 2 5°C. The boat from which the oil was spread travelled at 6 knots/hour and was fitted with a projecting boom equipped with two nozzles. The first nozzle sprayed a Kuwait crude oil onto the surface of the sea and was followed by the second nozzle which sprayed a mixture of sea water and dispersant onto the oil slick so produced. A surface breaker board was towed after the boat so as to create a turbulent surface condition and so facilitate dispersion of the oil.

**0 021 571**

The rate of oil flow and the rate of dispersant/sea water flow were fixed at approximately 18 litres/minute. The ratio of dispersant to sea water could be varied until interference patterns were noted on the surface of the water by an observer boat following behind, indicating incomplete dispersion of the oil. This test method was used in Examples 11—16.

Example 11

A typical conventional dispersant formulation was made up comprising:—

|  | Parts by weight |
| --- | --- |
| 1. Tall oil acid ethoxylated with 5 moles ethylene oxide | 10 |
| 2. Oleic acid ethoxylated with 5 moles ethylene oxide | 10 |
| 3. Kerosine | 80 |

1 part by weight of oil requires 1 part by weight of the dispersing agent to disperse it.

Example 12

A dispersing agent of the following composition was prepared

|  | Parts by weight |
| --- | --- |
| 1. Substance A | 5 |
| 2. Substance B | 15 |
| 3. Substance C | 60 |
| 4. Water | 20 |

1 part by weight of oil requires 1 part by weight of a mixture comprising 1 part by weight of the dispersing agent and 9 parts by weight of sea water.

Example 13

A dispersing agent of the following composition was prepared

|  | Parts by weight |
| --- | --- |
| 1. Substance A | 10 |
| 2. Substance B | 10 |
| 3. Substance C | 60 |
| 4. Water | 20 |

1 part by weight of oil requires 1 part by weight of a mixture comprising 1 part by weight of dispersing agent and 9 parts by weight of sea water.

Example 14

A dispersing agent as described in Example 4 was tested. 1 part by weight of oil requires 1 part by weight of a mixture comprising 1 part by weight of dispersing agent and 9 parts by weight of sea water.

6

# 0 021 571

Example 15

A dispersing agent of the following composition was prepared

|  | Parts by weight |
| --- | --- |
| 1. Substance A | 4.5% |
| 2. Water | 0.5% |
| 3. Substance B | 5.0% |
| 4. Substance C | 70% |
| 5. Mono ethoxylated *tert.* butanol | 20% |

1 part by weight of oil requires 1 part by weight of a mixture of 1 part of the dispersing agent to 12 parts by weight of sea water.

Example 16

A dispersing agent as described in Example 5 was tested. 1 part by weight of oil requires 1 part by weight of a mixture comprising 1 part by weight of dispersing agent and 99 parts by weight of sea water.

Example 17

One part of the compositions described below were mixed with 200 parts of water and the resulting formulation subjected to a simulated tank cleaning test in which it was sprayed onto a metal plate smeared with Bunker C fuel oil and heated at 60°C for 24 hours. Each formulation cleaned the oil from the plate even at ambient temperature.

Composition W

|  | Parts by weight |
| --- | --- |
| 1. Substance A | 10 |
| 2. Monoethanolamine | 35 |
| 3. Isodecanol with an average of 5.8 moles of ethylene oxide/mole of alcohol (Substance E) | 34 |
| 4. Substance B | 17 |
| 5. Block propylene oxide/ethylene oxide copolymer with a molar ratio of 30:4 (Substance F) | 3 |
| 6. Water | 1 |

Composition X

|  | Parts by weight |
| --- | --- |
| 1. Substance A | 10 |
| 2. Substance E | 24 |
| 3. Substance D | 34 |
| 4. Substance B | 18 |
| 5. Substance F | 4 |
| 6. Water | 10 |

7

# 0 021 571

Composition Y

|  | Parts by weight |
| --- | --- |
| 1. Substance A | 10 |
| 2. Substance B | 10 |
| 3. Substance E | 30 |
| 4. Water | 50 |

Composition Z

|  | Parts by weight |
| --- | --- |
| 1. Substance A | 18 |
| 2. Substance B | 20 |
| 3. Substance E | 60 |
| 4. Water | 2 |

## Claims

1. An oil dispersant which comprises

1. at least one compound which comprises at least 3 polyglycol residues each of which residues comprises 10 to 40 propylene oxide residues and 3 to 40 ethylene oxide residues and has 15 and 60 propylene and ethylene oxide residues in total per polyglycol residue, and which is a condensation product of ethylene and propylene oxide with a polyamine of formula $H_2N[(CH_2)_nNH]_pH$ in which n is an integer having a value of 1—12, and p is an integer having a value of 1—100, or with a para alkyl phenol/formaldehyde condensate having 3 to 12 alkyl phenol groups,
2. a non-ionic surfactant which is a condensation product of propylene oxide and/or ethylene oxide with an alcohol having 10 to 20 carbon atoms, an alkyl phenol having a total of 4 to 16 carbon atoms in its alkyl group or groups, a carboxylic acid having 10 to 20 carbon atoms or an amine or amide having 10 to 20 carbon atoms, the alcohol, acid, amine or amide having one or two functional groups each of which is condensed with from 2—20 propylene and/or ethylene oxide groups and
3. a solvent for (1) and (2) which is miscible with oil.

2. An oil dispersant as claimed in Claim 1 in which each polyglycol residue of the compound which comprises at least 3 polyglycol residues comprises 10 to 25 propylene oxide residues and 5 to 25 ethylene oxide residues.

3. An oil dispersant as claimed in Claim 1 or 2 in which the non-ionic surfactant is a product of condensation of an aliphatic amine, amide, carboxylic acid or alcohol which comprises a straight carbon chain, at most 2 carbon atoms being in side chains and which comprises at most 2 carbon to carbon double bonds, with propylene oxide and ethylene oxide, the ratio of propylene oxide to ethylene oxide residues being in the ratio 1:10 to 10:1.

4. An oil dispersant as claimed in any preceding claim in which the non-ionic surfactant is a condensation product of a mono functional compound with propylene oxide and/or ethylene oxide.

5. An oil dispersant as claimed in any preceding Claim in which the compound (1) is a condensation product of ethylene and propylene oxide with hexamethylene diamine.

6. A composition as claimed in any preceding claim in which the non-ionic surfactant comprises ethylene oxide and/or propylene oxide residues to the extent of 20 to 60% by weight of the total molecule, the amine, alcohol, acid, phenol or amide residues comprise the remainder of the molecule, and in which the total molecular weight of the molecule is 100 to 600.

7. An oil dispersant as claimed in any preceding claim in which the solvent comprises (a) a condensate of propylene oxide and/or ethylene oxide with an alcohol having 1 to 8 carbon atoms which condensate contains from 1 to 20 ethylene oxide and/or propylene oxide groups, and (b) one or more aliphatic or alicyclic hydrocarbons or alcohols having 8 to 30 carbon atoms.

8. An oil dispersant as claimed in claim 7 in which the ethylene oxide and propylene oxide are present in a ratio of 1:10 to 10:1.

9. A method of cleaning an oil tank, the sea or beach contaminated with oil which comprises applying a dispersant as claimed in any claims 1 to 8 to it.

8

## 0 021 571

**Patentansprüche**

1. Öldispergiermittel, enthaltend

1. mindestens eine Verbindung, die mindestens 3 Polyglykolreste enthält, wobei jeder dieser Reste 10 bis 40 Propylenoxidreste und 3 bis 40 Ethylenoxidreste enthält und je Polyglykolrest insgesamt 15 bis 60 Propylen- und Ethylenoxidreste vorhanden sind, und die ein Kondensationsprodukt von Ethylenund Propylenoxid mit einem Polyamin der Formel $H_2H[(CH_2)_nNH]_pH$, worin n eine ganze Zahl mit einem Wert von 1 bis 12 und p eine ganze Zahl mit einem Wert von 1 bis 100 ist, oder mit einem p-Alkylphenol/Formaldehyd-Kondensat mit 3 bis 12 Alkylphenolgruppen ist,

2. ein nichtionogenes Tensid, das ein Kondensationsprodukt von Propylenoxid und/oder Ethylenoxid mit einem Alkohol mit 10 bis 20 Kohlenstoffatomen, einem Alkylphenol, das in seiner Alkylgruppe oder seinen Alkylgruppen insgesamt 4 bis 16 Kohlenstoffatome enthält, einer Carbonsäure mit 10 bis 20 Kohlenstoffatomen oder einem Amin oder Amid mit 10 bis 20 Kohlenstoffatomen ist, wobei der Alkohol, die Carbonsäure, das Amin oder das Amid eine oder zwei funktionelle Guppen enthält, wobei jede funktionelle Gruppe mit 2 bis 20 Propylen- und/oder Ethylenoxidgruppen kondensiert ist, und

3. ein Lösungsmittel für (1) und (2), das mit Öl mischbar ist.

2. Öldispergiermittel nach Anspruch 1, bei dem jeder Polyglykolrest der mindestens 3 Polyglykolreste enthaltenden Verbindung 10 bis 25 Propylenoxidreste und 5 bis 25 Ethylenoxidreste enthält.

3. Öldispergiermittel nach Anspruch 1 oder 2, bei dem das nichtionogene Tensid ein Produkt der Kondensation eines aliphatischen Amins, eines aliphatischen Amids, einer aliphatischen Carbonsäure oder eines aliphatischen Alkohols mit einer geraden Kohlenstoffkette, wobei sich höchstens 2 Kohlenstoffatome in Seitenketten befinden, und mit höchstens 2 Kohlenstoff-Kohlenstoff-Doppelbindungen mit Propylenoxid und Ethylenoxid ist, wobei das Verhältnis von Propylenoxid- zu Ethylenoxidresten in dem Bereich von 1:10 bis 10:1 liegt.

4. Öldispergiermittel nach einem der vorhergehenden Ansprüche, bei dem das nichtionogene Tensid ein Kondensationsprodukt einer monofunktionellen Verbindung mit Propylenoxid und/oder Ethylenoxid ist.

5. Öldispergiermittel nach einem der vorhergehenden Ansprüche, bei dem die Verbindung (1) ein Kondensationsprodukt von Ethylen- und Propylenoxid mit Hexamethylendiamin ist.

6. Mischung nach einem der vorhergehenden Ansprüche, in der das nichtionogene Tensid Ethylenoxid- und/oder Propylenoxidreste bis zum Betrag von 20 bis 60 Gew.-%, auf das gesamte Molekül besogen, enthält, wobei die Amin-, Alkohol-, Carbonsäure-, Phenol- oder Amidreste den Rest des Moleküls bilden und das gesamte Molekulargewicht des Moleküls 100 bis 600 beträgt.

7. Öldispergiermittel nach einem der vorhergehenden Ansprüche, bei dem das Lösungsmittel (a) ein Kondensat von Propylenoxid und/oder Ethylenoxid mit einem Alkohol mit 1 bis 8 Kohlenstoffatomen, wobei das Kondensat 1 bis 20 Ethylenoxid- und/oder Propylenoxidgruppen enthält, und (b) einen oder mehr als einen aliphatischen oder alicyclischen Kohlenwasserstoff oder Alkohol mit 8 bis 30 Kohlenstoffatomen enthält.

8. Öldispergiermittel nach Anspruch 7, bei dem Ethylenoxid und Propylenoxid in einem Verhältnis von 1:10 bis 10:1 vorhanden sind.

9. Verfahren zur Reinigung eines Öltanks, des Meeres oder eines Küstenstreifens bzw. Strandes, die mit Öl verunreinigt sind, bei dem auf das Öl ein Dispergiermittel nach einem der Ansprüche 1 bis 8 aufgebracht wird.

**Revendications**

1. Agent de dispersion pour l'huile qui comprend:

1. au moins un composé qui comprend au moins 3 restes de polyglycol dont chacun comprend 10—40 restes d'oxyde de propylène et 3—40 restes d'oxyde d'éthylène et compte 15 à 60 restes d'oxyde de propylène et d'éthylène au total par reste de polyglycol, et qui est un produit de condensation d'oxyde d'éthylène et de propylène avec une polyamine de formule $H_2N[(CH_2)_nNH]_pH$ où n est un nombre entier d'une valeur de 1—12 et p est un nombre entier d'une valeur de 1—100, ou avec un produit de condensation para-alcoylphénol/formaldéhyde comptant 3—12 radicaux alcoylphénol,

2. un surfactif non ionique, qui est un produit de condensation d'oxyde de propylène et/ou d'oxyde d'éthylène avec un alcool comptant 10 à 20 atomes de carbone, un alcoylphénol comptant au total 4 à 16 atomes de carbone dans son ou ses radicaux alcoyle, un acide carboxylique comptant 10 à 20 atomes de carbone ou une amine ou un amide comptant 10 à 20 atomes de carbone, l'alcool, l'acide, l'amine ou l'amide comprenant un ou deux radicaux fonctionnels dont chacun est condensé avec 2—20 radicaux oxyde de propylène et/ou d'éthylène, et

3. un solvant pour 1. et 2. qui est miscible avec l'huile.

2. Agent de dispersion pour l'huile suivant la revendication 1, dans lequel chaque reste de polyglycol du composé qui comprend au moins 3 restes de polyglycol comprend 10 à 25 restes d'oxyde de propylène et 5 à 25 restes d'oxyde d'éthylène.

9

3. Agent de dispersion pour l'huile suivant la revendication 1 ou 2, dans lequel le surfactif non ionique est un produit de condensation d'une amine, d'un amide, d'un acide carboxylique ou d'un alcool aliphatique qui comprend une chaîne carbonée droite, au maximum 2 atomes de carbone se trouvant en chaînes latérales, et qui comprend au maximum deux doubles liaisons carbone-carbone, avec l'oxyde de propylène et l'oxyde d'éthylène, le rapport des restes d'oxyde de propylène aux restes d'oxyde d'éthylène étant de 1:10 à 10:1.

4. Agent de dispersion pour l'huile suivant l'une quelconque des revendications précédentes, dans lequel le surfactif non ionique est un produit de condensation d'un composé monofunctionnel avec l'oxyde de propylène et/ou l'oxyde d'éthylène.

5. Agent de dispersion pour l'huile suivant l'une quelconque des revendications précédentes, dans lequel le composé 1. est un produit de condensation d'oxyde d'éthylène et de propylène avec l'hexaméthylènediamine.

6. Composition suivant l'une quelconque des revendications précédentes, dans laquelle le surfactif non ionique comprend des restes d'oxyde d'éthylène et/ou d'oxyde de propylène à raison de 20 à 60% en poids de la molécule complète, les restes d'amine, d'alcool, d'acide, de phénol ou d'amide formant la partie restante de la molécule, et dans laquelle le poids moléculaire total de la molécule est de 100 à 600.

7. Agent de dispersion pour l'huile suivant l'une quelconque des revendications précédentes, dans lequel le solvant comprend (a) un produit de condensation d'oxyde de propylène et/ou d'oxyde d'éthylène avec un alcool comptant 1 à 8 atomes de carbone, lequel produit de condensation comprend 1 à 20 radicaux oxyde d'éthylène et/ou oxyde de propylène, et (b) un ou plusieurs hydrocarbures ou alcools aliphatiques ou alicycliques comptant 8 à 30 atomes de carbone.

8. Agent de dispersion pour l'huile suivant la revendication 7, dans lequel l'oxyde d'éthylène et l'oxyde de propylène sont présents dans un rapport de 1:10 à 10:1.

9. Procédé de nettoyage d'une citerne à huile, de la mer ou d'une plage contaminée par de l'huile, qui comprend l'application à cet entroit d'un agent de dispersion suivant l'une quelconque des revendications 1 à 8.